# EUROPEAN PATENT APPLICATION

(11) **EP 4 325 375 A1**
(43) Date of publication of application: **21.02.2024**
(21) Application number: 22806304.6
(22) Date of filing: 23.03.2022
(51) Int. Cl.: G06F 16/33

(54) **KNOWLEDGE REPRESENTATION AND DEDUCTION METHOD AND APPARATUS FOR SERVICE LOGIC**

(30) Priority: 12.05.2021 CN 202110519283
(71) Applicant: Huawei Technologies Co., Ltd., Longgang Shenzhen, Guangdong 518129 (CN)
(72) Inventor: DUAN, Rong, Shenzhen, Guangdong 518129 (CN); HU, Kangxing, Shenzhen, Guangdong 518129 (CN); HUANG, Wenwen, Shenzhen, Guangdong 518129 (CN); YUAN, Yuan, Shenzhen, Guangdong 518129 (CN); PENG, Wen, Shenzhen, Guangdong 518129 (CN); LIU, Chunxi, Shenzhen, Guangdong 518129 (CN); YANG, Qinjie, Shenzhen, Guangdong 518129 (CN); YIN, Xiaoliang, Shenzhen, Guangdong 518129 (CN); LI, Shufan, Shenzhen, Guangdong 518129 (CN)
(74) Representative: Huawei European IPR
(86) International application number: PCT/CN2022/082473
(87) International publication number: WO 2022/237334

(57) **Abstract**

Embodiments of this application disclose a method and an apparatus for knowledge representation and deduction of service logic. The method includes: generating, based on a knowledge representation model, a semantic graph corresponding to conceptual-layer service logic, where the semantic graph includes one or more types of nodes and edges for connecting the one or more types of nodes, and the nodes include at least a node of a variable type; generating, based on the semantic graph and a physical table to which a service object is mapped, an instance graph, where the instance graph includes the nodes and edges in the semantic graph; generating executable code based on a service logic relationship between the nodes in the instance graph; and determining, based on the executable code and a data instance corresponding to a node whose in-degree is 0 in the instance graph, a data instance corresponding to each node in the instance graph, where the data instance corresponding to the node may be deduced based on a data instance of a previous fork node on which the node depends.

## Description

This application claims priority to Chinese Patent Application No. 202110519283.0, filed with the China National Intellectual Property Administration on May 12, 2021 and entitled "METHOD AND APPARATUS FOR KNOWLEDGE REPRESENTATION AND DEDUCTION OF SERVICE LOGIC", which is incorporated herein by reference in its entirety.

### TECHNICAL FIELD

This application relates to the field of artificial intelligence technologies, and in particular, to a method and an apparatus for knowledge representation and deduction of service logic.

### BACKGROUND

Currently, much professional knowledge in various service fields of an enterprise is not explicitly represented. During service analysis, a user needs to sort, outside a system, the knowledge into specific service logic to act on data, so as to obtain an analysis result. Because the service logic is not explicitly represented, IT personnel often need to contact service personnel to learn a requirement, and then convert the requirement into computer code to be consolidated into an IT system. Then an output result of a data set after the code is run can be finally fed back to the service personnel. This brings many inconveniences. First, a chain from the professional knowledge to computing result feedback is relatively long, involving a plurality of phases such as IT personnel's understanding and analysis of the service requirement, module design, and code development and testing. Therefore, a cycle is relatively long. The service personnel cannot directly configure the knowledge and cannot obtain feedback in a timely manner by using a knowledge computing result. Second, a service user cannot view service logic implemented in the IT system, and cannot intervene in or adjust the logic. This leads to two consequences: first, the result is in a lack of interpretability, and how the computing result was obtained is quite puzzling; second, the logic cannot be dynamically adjusted. The service user usually has a requirement for dynamically adjusting the logic in a deduction and analysis process. For example, if the service logic is estimated based on some assumptions, the service user needs to determine, based on a computing result that is immediately fed back, whether expectation is met, and then determines whether to perform dynamic adjustment. However, for a conventional deduction system, service logic is hidden in IT code. Any logic adjustment triggers a system development change process (as described in the preceding first point). In other words, logic cannot be adjusted in real time, let alone instant feedback of a result of computing based on new logic. Third, a concept presentation layer of the service knowledge is not decoupled from an instance layer of the service knowledge. Therefore, the system does not support automated knowledge management and analysis.

Here, representation related only to service logic is referred to as conceptual-layer representation; and combining the service logic and a data structure, and concretizing them into an actual running environment to form executable code logic is referred to as instance-layer representation. The two are closely related. A process from the conceptual layer to the instance layer is an instantiation process, which is also a process from abstraction of the service knowledge to concretization of the service knowledge. In conventional IT system implementation, merely logic of the instance layer is retained, but there is no explicit task representation of the conceptual layer, let alone connection establishment. Therefore, many limitations exist: first, because the conceptual layer is not represented and not abstracted, there are no knowledge management and knowledge reasoning functions, and analysis of associated impact between logical elements cannot be performed; second, because no connection is established between instance-layer logic and the data result, what-if analysis cannot be supported; third, because no connection is established between the conceptual-layer logic and the instance-layer logic, automatic code generation after the user enters the service logic cannot be implemented.

The logic in the preceding data analysis process is invisible, and the analysis result cannot be interpreted. A current technical state in the industry is as follows: some service logic configuration tools exist, but merely implement, by using a configuration manner, a process of IT implementation of program code. Although IT logic can be viewed and a computing result can be instantly fed back, there is no conceptual-layer representation of service logic. The result is still not interpretable to service personnel, and the service personnel cannot dynamically adjust the logic instantly based on the computing result. In addition, some tools (for example, drools and Qizheng) similar to a rule engine exist. Although service logic is stored in a form of rules to separate the service logic from data, for such a tool, conceptual-layer representation of the service logic is not sufficient. This is reflected in a lack of explicit representation of rule elements. As a result, subsequent automated knowledge management cannot be supported, and analysis of associated impact between elements cannot be performed.

### SUMMARY

Embodiments of this application provide a method and an apparatus for knowledge representation and deduction of service logic.

According to a first aspect, an embodiment of this application provides a method for knowledge representation and deduction of service logic, where the method includes:
generating, based on a knowledge representation model, a semantic graph corresponding to conceptual-layer service logic, where the semantic graph includes one or more types of nodes and edges for connecting the one or more types of nodes, and the nodes include at least a node of a variable type;
generating, based on the semantic graph and a physical table to which a service object is mapped, an instance graph, where the instance graph includes the nodes and edges in the semantic graph;
generating executable code based on a service logic relationship between the nodes in the instance graph; and
determining, based on the executable code and a data instance corresponding to a node whose in-degree is 0 in the instance graph, a data instance corresponding to each node in the instance graph, where the data instance corresponding to the node may be deduced based on a data instance of a previous fork node on which the node depends.

In a possible implementation, the generating, based on a knowledge representation model, a semantic graph corresponding to conceptual-layer service logic includes:
obtaining, from the knowledge representation model, nodes and edges corresponding to the conceptual-layer service logic; and
generating, based on the nodes and edges corresponding to the conceptual-layer service logic, the semantic graph.

In a possible implementation, the conceptual-layer service logic includes: logic of an operation rule type, logic of a condition-based determination type, and/or logic of a complex function/model type.

In a possible implementation, the nodes further include a node of a constant type, a node of a function type, and/or a node of a container type, where the node of the container type is encapsulated with a semantic graph that includes different types of nodes and different types of edges and that is invoked by an upper-layer semantic graph to construct a multi-level semantic graph.

In a possible implementation, the edges include: an edge of a process control relationship type, an edge of a computing relationship type, an edge of a logical determination relationship type, and/or an edge of a logical link relationship type.

In a possible implementation, the generating executable code based on a service logic relationship between the nodes in the instance graph includes:
performing local width-first traversal by using the node whose in-degree is 0 in the instance graph as a start node, and generating, based on a dependency relationship between the nodes in the instance graph, a plurality of paths that can run independently and in parallel;
determining, in a traversal process, a subpath that matches a predefined meta-path feature, and generating, based on semantic meanings that correspond to types of nodes in the path and semantic meanings that correspond to edges in the path, executable code; and
if a node of a container type is found in the traversal process, opening lower-layer submap logic encapsulated in the container node; traversing a submap based on the same logic, to finish generating executable code in the submap; and then returning to an upper-layer instance graph, to continue to perform a subsequent operation.

In a possible implementation, the method further includes:
removing, based on the predefined meta-path feature, a path on which a node that has no data instance in the instance graph is located.

In a possible implementation, the method further includes:
determining a running state and a running progress of the executable code in a computing environment.

In a possible implementation, the method further includes:
performing conflict detection on the semantic graph.

In a possible implementation, the performing conflict detection on the semantic graph includes:
determining that an initially-detected node is not in a node set of a current connection graph, and then performing depth-first traversal starting from the initially-detected node; and
each time a node is traversed, if the node does not have an access mark, marking the node with an access mark, adding the node to the node set of the current connection graph, and continuing with the traversal downward; otherwise, determining that a directed loop is found, and outputting path information formed by all nodes that have an access mark; and if an out-degree of the node is greater than 1 and/or an in-degree of the node is greater than 1, storing a previous fork node and/or a next fork node that are/is not traversed by the node into a queue; or
if an out-degree of the node is 0, clearing access marks of all nodes in the current connection graph, taking a new node out of a queue of a previous fork node and/or a next fork node, and repeating the preceding steps; otherwise, selecting a node not in the current connection graph, and repeating the preceding steps.

In a possible implementation, the method further includes:
performing logic representation ambiguity detection on the semantic graph.

In a possible implementation, the performing logic representation ambiguity detection on the semantic graph includes:
in the semantic graph, when an assumed condition, represented by if-then, of the conceptual-layer service logic is met, if at least two processing manners appear, determining that logic representation ambiguity exists in the semantic graph.

In a possible implementation, the method further includes:
performing associated-impact analysis on the dependency relationship between the nodes in the instance graph, and performing what-if analysis based on an adjusted data instance, where the what-if analysis is used to represent impact of the adjusted data instance on a subsequent dependent node.

In a possible implementation, the method further includes:
if a data instance corresponding to a node in the instance graph does not meet service expectation, regenerating, based on the knowledge representation model, a semantic graph corresponding to modified conceptual-layer service logic.

According to a second aspect, an embodiment of this application provides an apparatus for knowledge representation and deduction of service logic, including at least one processor, where the processor is configured to perform a program stored in a memory, and when the program is performed, the apparatus is enabled to perform:
the method according to the first aspect and each possible implementation of the first aspect.

According to a third aspect, an embodiment of this application provides a computer program product including instructions. When the computer program product runs on a computer, the method according to the first aspect and each possible implementation of the first aspect is enabled to be performed by the computer.

According to a fourth aspect, an embodiment of this application provides a computer-readable storage medium, where the computer-readable storage medium stores a computer program; and when the computer program is performed by a processor, the method according to the first aspect and each possible implementation of the first aspect is performed.

### BRIEF DESCRIPTION OF DRAWINGS

To describe technical solutions in embodiments of this application more clearly, the following briefly describes the accompanying drawings required in the embodiments. Apparently, the accompanying drawings in the following description show merely some embodiments of this application, and a person of ordinary skill in the art may deduce other accompanying drawings from these accompanying drawings without creative efforts.
FIG. 1 is a schematic diagram of a system according to an embodiment of this application;
FIG. 2 is a schematic diagram of a semantic graph corresponding to service logic according to an embodiment of this application;
FIG. 3 is a schematic flowchart of a method for knowledge representation and deduction of service logic according to an embodiment of this application;
FIG. 4 is a schematic diagram of a semantic graph according to an embodiment of this application;
FIG. 5 is a schematic diagram of a user interface according to an embodiment of this application;
FIG. 6 is a schematic diagram of mapping a service object to a physical table and mapping attributes of the service object to fields in the physical table respectively according to an embodiment of this application;
FIG. 7 is a schematic diagram of data instances corresponding to elements in attributes of a service object according to an embodiment of this application;
FIG. 8 is a schematic diagram of an instance graph (displaying data instances corresponding to some nodes) according to an embodiment of this application;
FIG. 9 is a schematic diagram of generating, based on a dependency relationship between nodes in an instance graph, a plurality of paths that can run independently and in parallel according to an embodiment of this application;
FIG. 10 is a schematic diagram of a node-computing logic dictionary according to an embodiment of this application;
FIG. 11 is a schematic diagram of an instance graph (displaying data instances corresponding to all nodes) according to an embodiment of this application;
FIG. 12 is a schematic diagram of a semantic graph in which loop dependency exists according to an embodiment of this application;
FIG. 13 is a schematic diagram of a semantic graph in which logic representation ambiguity exists according to an embodiment of this application; and
FIG. 14 is a schematic diagram used to represent what-if analysis according to an embodiment of this application.

### DESCRIPTION OF EMBODIMENTS

To make the objectives, technical solutions, and advantages of embodiments of this application clearer, the following further describes specific implementations of embodiments of this application in detail with reference to the accompanying drawings.

It needs to be noted that, the term "and/or" in this application describes only an association relationship for describing associated objects and represents that three relationships may exist. For example, A and/or B may represent the following three cases: Only A exists, both A and B exist, and only B exists. In embodiments of this application, the words such as "example" and "for example" are used to represent giving an example, an illustration, or a description. Any embodiment or design scheme described by using "example", or "for example", or "such as" in embodiments of this application shall not be construed as having more advantages than another embodiment or design scheme. To be exact, use of the words such as "example" or "for example" is intended to present a relative concept in a specific manner. In the description of embodiments of this application, "a plurality of" means two or more than two unless otherwise stated.

In a possible implementation, a service logic code generation method is proposed. A specific process is as follows: first, a data source, a logical operation, and a data output channel are encapsulated into a visualized data source component, a logical operation component, and a data output channel component respectively in advance for a user to select; then, the user can set, based on an application scenario, corresponding component parameters for the data source component, the logical operation component, and the data output channel component; then the user drags the components to complete connections between the components, to form a flowchart; and a system converts the flowchart into a character string corresponding to the flowchart, and then parses the character string to generate service logic code. A main purpose of the foregoing solution is to improve efficiency of a developer. A common processing manner used in a data preprocessing process is written into code functions, and then encapsulated into visualized components for the user to use in a drag-and-drop manner, so as to implement visualized programming. In the foregoing solution, an underlying technology is shielded, a Big-Data development process is simplified, and a development threshold is lowered, so that an application scenario of most streaming with real-time Big-Data processing becomes easier, controllable, and reliable. However, a configurable granularity still stays at a data component level with a large granularity, and flexibility is reduced to some extent; and due to the large granularity, factors that affect service logic are not explicitly presented, causing failure to support subsequent knowledge analysis and quality management. In addition, because a conceptual layer and an instance layer of the service logic are not separated, service personnel cannot perform configuration. Rules can be executed, but dependency between the rules cannot be presented, and a logic computing result cannot be interpreted.

In another possible implementation, a service rule processing method, an apparatus, a device, a system, and a storage medium are proposed. In the method, a plurality of service rules are configured based on a service target, and the plurality of service rules can form an annular directed graph structure based on an execution sequence and a dependency relationship that are configured in rule configuration information; and each service rule is executed based on an execution sequence and a dependency relationship of each service rule. In the technical solution, a service rule of a complex service can be efficiently and flexibly processed, so that a real-time decision-making application scenario such as distributed or high-concurrency processing is supported. However, in the technical solution, a logic management granularity for completing service configuration is at a rule level, and therefore, a service logic dependency relationship can only be at a rule-level logic unit granularity. In actual service logic, a rule contains a plurality of rule elements; and a rule can be executed only when the rule elements are complete. Therefore, why a dependency exists between rules can be visually revealed only when information about these elements is displayed and represented. For example, different rules usually have a common rule element, and then these rules depend on each other. For another example, a rule element on which a rule B depends can be obtained only from a rule A, and therefore a dependency relationship exists between the rule A and the rule B. However, neither the invention nor existing rule engines in a current market can explicitly represent rule elements in a service rule, thereby inevitably causing the foregoing limitations.

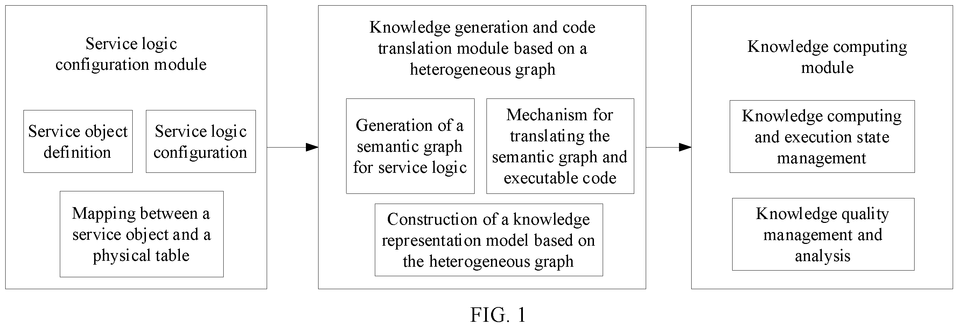

FIG. 1 is a schematic diagram of a system applicable to an embodiment of this application. As shown in FIG. 1, the whole system includes three major modules: a service logic configuration module, a knowledge generation and code translation module based on a heterogeneous graph, and a knowledge computing module.

A first module is the service logic configuration module. Mostly a user enters, in a friendly interface mode such as a near-natural language or a table, service logic, including service object definition, service logic configuration, and mapping between a service object and a physical table. In an example, the service object is defined as a group profit and loss object; the service logic is as follows: Profit = Revenue - Cost - Expense - Other expenditure, and Revenue = Order × Revenue-to-order rate; and the physical table to which the service object (the group profit and loss object) is mapped is GRP_IS.

A second module is the knowledge generation and code translation module based on a heterogeneous graph. In this application, service logic is converted in a manner easy for human to understand, in which knowledge computing can be performed by a machine. An execution process is visualized to support result interpretability, and service elements are explicitly represented, so as to support analysis of associated impact between the service elements. This part mainly performs service logic abstraction and provides specific knowledge representation manners, so that a knowledge representation space can cover a service logic description space. A knowledge representation model in this embodiment of this application carries representation of service logic, to complete functions of this part. Generation of a semantic graph for service logic is based on the knowledge representation model. Different service logic is converted, based on a heterogeneous graph model, into unified semantic representation of the service logic. Service logic represented here is still conceptual and does not reach an executable level specifically at a data layer. From the semantic graph to an executable-code mechanism module: automatic translation from semantic logic to code logic to be executed is completed by using a service logic semantic layer represented by the heterogeneous graph, and a user-specified physical table corresponding to the service object, and a specified execution environment. Therefore, this module includes generation of a semantic graph for service logic; a mechanism for translating the semantic graph and executable code; and construction of the knowledge representation model based on the heterogeneous graph. This module generates, based on the knowledge representation model, a semantic graph corresponding to the service logic; generates, based on the semantic graph and a physical table to which the service object is mapped, an instance graph; and translates the instance graph into executable code based on a service logic relationship between nodes in the instance graph.

A third module is the knowledge computing module, including knowledge computing and execution state management, and knowledge quality management and analysis. The knowledge computing and execution state management completes running of the executable code in a computing environment, and determines a running state and a running progress of the executable code. The knowledge quality management and analysis checks, mainly by using the service logic represented by the semantic graph, whether a service logic conflict or contradiction exists, and supports association analysis, specifically including performing conflict detection and logic representation ambiguity detection on the semantic graph.

In this embodiment of this application, based on service scenario analysis and collection, there are mainly the following types of service logic representation manners.
(1) Logic of an operation rule type: a quantity relationship exists between service elements, and can be defined by using a formula, for example, Revenue = Order × Revenue-to-order rate.
(2) Logic of a condition-based determination type (if... then...): this type of service logic is mainly used in a slightly complex service scenario where an operation relationship between service elements needs to depend on a prerequisite; or a scenario needs to be divided into sub-scenarios based on whether a relationship between service elements is established and whether a threshold is exceeded, and then an operation relationship between service elements is defined in each sub-scenario. For example, in a service scenario where deterioration of a project revenue and expenditure risk is to be determined,
   if: Annual forecast - Annual budget < -5M, or Full lifecycle forecast - Full lifecycle budget < -5M, where M represents Million (million),
   then: Forecast-to-budget gross-profit contribution deterioration flag = True.
(3) Logic of a complex function/model type: the first two types of logic are easy to understand, and details of service logic are described in a white box manner. However, in some scenarios, a user relies on an external functional module or a function for implementation. The user regards specific implementation as a black box and does not need to understand internal detailed logic. In this case, during description of this part of service logic, merely service elements that need to be input into the black box, a service function that can be implemented by the black box, and a service result to be output by the black box need to be described.

For example, evaluation of a customer's solvency level is obtained by sending a historical performance list of the customer with transactions to a machine learning model and using a complex algorithm. The user needs only to know what service elements need to be entered to obtain the customer's solvency level, and then can obtain a desired result. For example, Customer solvency level = Customer solvency level model (profit before interest and tax in a past year, debt growth rate, liquidity rate, and operating efficiency)

The foregoing service logic has its characteristics. Specifically, the service logic includes a plurality of service elements, and there is a large number of quantity relationships between the service elements. This is a main manner of logic representation in a service analysis and deduction process. A quantitative relationship between service elements is not constant, and needs to be determined based on a specific scenario. In a more complex scenario, different quantitative relationships exist under different conditions. Although the service logic itself is represented in a self-understanding manner of a service, some external capabilities are introduced for assistance. These functions internally provide, in a black box manner, a result of quantitative data for the service; and can be introduced as function nodes in service knowledge representation.

Based on the foregoing characteristics, a method for service knowledge representation based on a heterogeneous graph is proposed. Two basic elements of a heterogeneous graph are: node and edge. Specifically, a node represents a service element included in service logic. Nodes can be classified into different types according to different features after service element abstraction. For different node types, refer to Table 1. An edge represents an operation relationship between nodes. Similarly, after relationship abstraction, edges are classified into different types according to differences in features of the edges. For different edge types, refer to Table 2.

**Table 1**

| Node type | Node name | Meaning |
|---|---|---|
| Variable | Variable_OBJ | Variable_object node: corresponds to a service object node. |
| | Variable_ATTR | Variable_attribute node: corresponds to an attribute node of a service object. |
| | Variable_ELE | Variable_element node: corresponds to an element of an attribute in a service object, such as Revenue. |
| Constant | Constant | Constant node, which indicates some empirical service parameter values that can be adjusted in service logic. |
| Function | Intra_Judge_FUN | Shows a logic node representing determination, which is a function node for authenticity determination based on service element inputs and customized service logic. |
| | Intra_PreDEF_FUN | Shows a function representing service logic. This function is invisible to service personnel but visible to IT personnel. A complex function can be configured, and function logic can be stored. |
| | Intra_Bultin_FUN | Built-in function node: defines a standard function. A user only needs to configure parameters to represent a complete function. Function logic is not stored. Code logic is automatically generated by a subsequent parser. |
| | Extra_Fun | A node that implicitly represents complex computing. There is no built-in logic. Service logic is implemented by invoking an external function and a service, such as a complex computing function and an algorithm model. Logic details are a black box for a user. |
| Container | Container | Indicates a logic encapsulation node. A node of a container type is encapsulated with a semantic graph that includes different types of nodes and different types of edges, where the semantic graph is invoked by an upper-layer semantic graph, to construct a multi-layer semantic graph. |

**Table 2**

| Relationship type | Relationship name | Meaning |
|---|---|---|
| Process control relationship | Input | Indicates an input relationship. Data is input from a previous node of a connection to a next node. |
| | Output | Indicates an output relationship. A previous node of a connection outputs data to a next node. |
| | Infer | Inference relationship. A previous node is generally a determination function node. A heterogeneous network performs transmission backward only when a condition is true. |
| | dependence | Running flow dependency relationship |
| Computing relationship | PartOf | Part-of relationship. A child node and a parent node can be converted into aggregate computing logic. |
| | FactOf | Factor relationship. A child node and a parent node can be converted into product computing logic. |
| | Not_PartOf | Not-part-of relationship. A child node and a parent node can be converted into total-minus-part computing logic. |
| | Not_Factof | Inverse-factor relationship. A child node and a parent node can be converted into total-divided-by-part computing logic. |
| Logic determination relationship | Greater_Than | Greater than. A relationship exists, in which a number of child nodes is greater than that of parent nodes. |
| | Less_Than | Less than. A relationship exists, in which a number of child nodes is less than that of parent nodes. |
| | Not_Equal_To | Not equal. A relationship exists, in which a number of child nodes is not equal to that of parent nodes. |
| | Greater_Equal_Than | Greater than or equal to. A relationship exists, in which a number of child nodes is greater than or equal to that of parent nodes. |
| | Less_Equal_Than | Less than or equal to. A relationship exists, in which a number of child nodes is less than or equal to that of parent nodes. |
| Logical link relationship | Not | Not relationship |
| | And | And relationship |
| | Or | Or relationship |

Based on the foregoing heterogeneous graph design, service logic representation of a data analysis and deduction scenario can be supported. For example, when service logic of a risk control scenario needs to be represented as follows:
logic 1: logic for computing a risk deterioration value. Specifically, when a risk probe of a project is greater than a threshold, risk deterioration is confirmed and a risk deterioration score is computed. Service logic represented as follows after sorting:
if: Score of the project risk probe > Threshold (Threshold) (formula 1),
then: compute a risk deterioration score.

The project risk probe is related to four key service elements, respectively as follows:
project type complexity (X1), failure of customer interface assumptions to fall into a bidding document (X2), failure of the customer interface assumptions to fall into a contract (X3), emergence of a large proportion of new additions in an execution process (X4). The four service elements each have a quantitative value respectively. If a sum of values of the four service elements is greater than a threshold (Threshold), service personnel determine that a probability of risk deterioration exists for the project, where the score of the project risk probe = X1 + X2 + X3 + X4.

A quantitative value of risk deterioration is related to three service elements, the project type complexity X1, a project change rate X5, and an overdue closure rate X6: Risk deterioration value = X1 × X5 × X6.

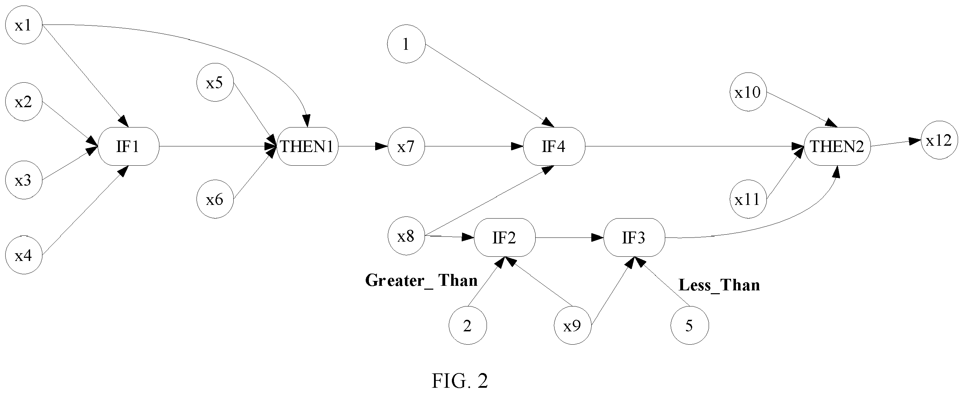

In this way, service elements of service logic are respectively represented by using nodes of the variable type, determination logic is represented by using a node of the Intra_Judge_FUN type, and customized logic is represented by using a node of the Intra_PreDEF_FUN type. Service logic represented based on the heterogeneous graph is then:
if: Project risk determination logic IF1(x1,x2,x3,x4),
then: x7 = Project risk deterioration value THEN1(x1,x5,x6); and
if: [(Cost jump determination logic IF2(x8,x9) and External risk deterioration IF3(x9)] or Project payable deterioration determination IF4(x7,x8),
then: x12 = Final comprehensive value of project risk THEN2(x10,x11),
as shown in FIG. 2.

It needs to be noted that, in this application, construction of the knowledge representation model of the service logic is a primary issue to be resolved. The knowledge representation model is constructed based on the foregoing types of service logic. For example, based on concept-level service logic, that is, Profit = Revenue - Cost - Expense - Other expenditure, Revenue = Order × Revenue-to-order rate, CBG = Honor + Huawei, Global = China region + Outside China, a constructed knowledge representation model is: f Profit node, Revenue node, Cost node, Expense node, Other expenditure node, Order node, Revenue-to-order rate node, CBG node, Honor node, Huawei node, Global node, China region node, Outside China node, edge Part Of, edge Not_Part Of, edge FactOf}.

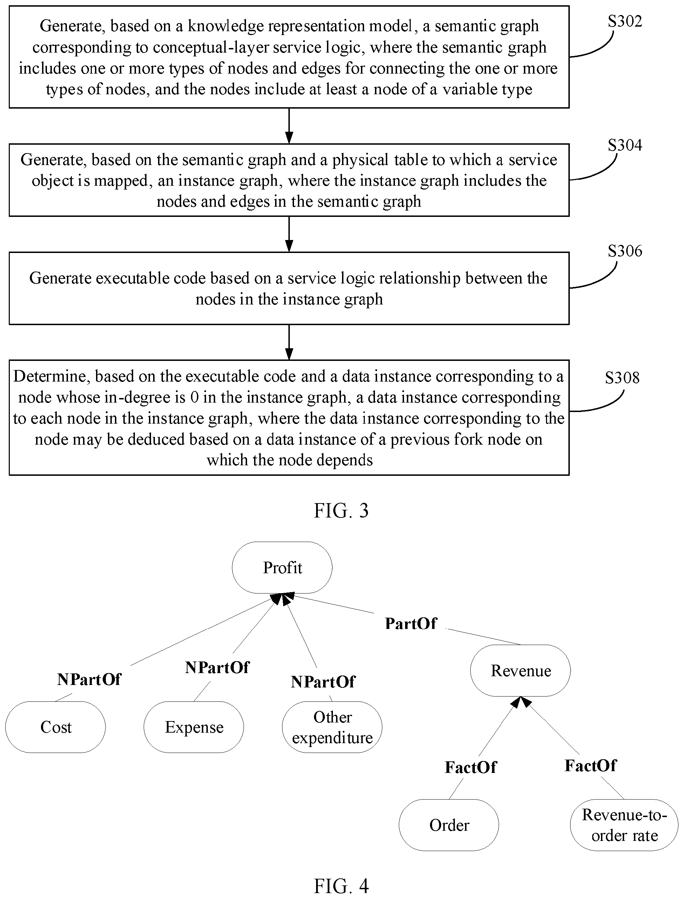

FIG. 3 is a schematic flowchart of a method for knowledge representation and deduction of service logic according to an embodiment of this application. The schematic flowchart includes steps S302 to S308.

The following describes in detail the method for knowledge representation and deduction of service logic shown in FIG. 3 according to this embodiment of this application.

In a possible implementation, the method for knowledge representation and deduction of service logic provided in this embodiment of this application is implemented by using the following steps.

It needs to be noted that, in this embodiment of this application, a service object is a group profit and loss object; attributes of the service object are Profit and loss indicator, Product, and Region; elements in the attribute Profit and loss indicator are Profit, Revenue, Cost, Expense, Order, Revenue-to-order rate, and Other expenditure; and elements in the attribute Product are CBG, Honor, and Huawei, and elements in the attribute Region are Global, China, and Outside China. The service object, the attributes of the service object, and the elements in the attributes of the service object are collectively referred to as service elements. The following describes the method for knowledge representation and deduction of service logic by using an example in which conceptual-layer service logic is: Profit = Revenue - Cost - Expense - Other expenditure, and Revenue = Order × Revenue-to-order rate.

S302: Generate, based on a knowledge representation model, a semantic graph corresponding to conceptual-layer service logic, where the semantic graph includes one or more types of nodes and edges for connecting the one or more types of nodes, and the nodes include at least a node of a variable type.

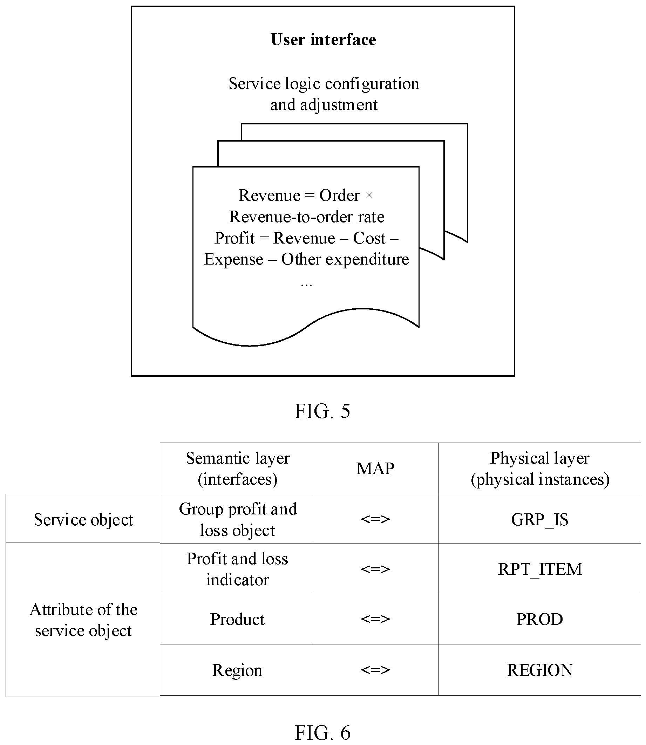

In a possible implementation, nodes and edges corresponding to the conceptual-layer service logic are obtained from the knowledge representation model. Specifically, a user may finish assembling the service logic by dragging the Profit node, the Revenue node, the Cost node, the Expense node, the Other expenditure node, the Order node, the Revenue-to-order rate node, the edge Part Of, the edge Not_Part Of, and the edge FactOf in the preceding knowledge representation model, to form a semantic graph corresponding to the conceptual-layer service logic (that is, Profit = Revenue - Cost - Expense - Other expenditure, and Revenue = Order × Revenue-to-order rate). In addition, the user can alternatively enter the service logic on a user interface based on a similar-form natural language manner, for example, the user determines that service element names need to be defined and unified, a service element needs to be determined by adding a qualifier <>, and standardized keywords "if" and "then" need to be used for scenario determination; and a semantic graph corresponding to the conceptual-layer service logic (that is, Profit = Revenue - Cost - expense - Other expenditure, and Revenue = Order × Revenue-to-order rate) is generated by identifying service elements in the service logic described in the natural language manner and identifying relationships between the service elements. The entry of the service logic includes entry of each service element of the service logic, definition of a service object, service logic configuration, and mapping between the service object and a physical table. Alternatively, the user may enter information about each service element based on a second type of natural language representation, but a wizard-like input interface, rather than direct entry of a text string, is presented to the user; and a semantic graph corresponding to the conceptual-layer service logic (that is, Profit = Revenue - Cost - Expense - Other expenditure, and Revenue = Order × Revenue-to-order rate) is generated by identifying service elements in the service logic described in the second type of natural language manner and identifying relationships between the service elements. The service logic is converted into a semantic graph, and the service logic is represented in detail and complete at a conceptual layer but does not yet reach an executable specifically at a data layer. The service logic can be displayed in a visualized and friendly manner. An advantage of the service logic visualization enables the user to directly adjust and configure the service logic. FIG. 4 shows a semantic graph corresponding to the foregoing conceptual-layer service logic, capable of supporting representation of complex service logic and visualization of service logic. The service logic can be carried in an explicit and easy-to-understand manner, which facilitates human-computer interaction, where the human represents service personnel. The service logic can be sufficiently abstracted and structured, to support subsequent automatic transfer, from logic to a machine, of code execution work. Association relationships between all elements of the service logic can be clearly represented, to support subsequent automated knowledge management and analysis. The foregoing user interface is shown in FIG. 5.

S304: Generate, based on the semantic graph and a physical table to which a service object is mapped, an instance graph, where the instance graph includes the nodes and edges in the semantic graph.

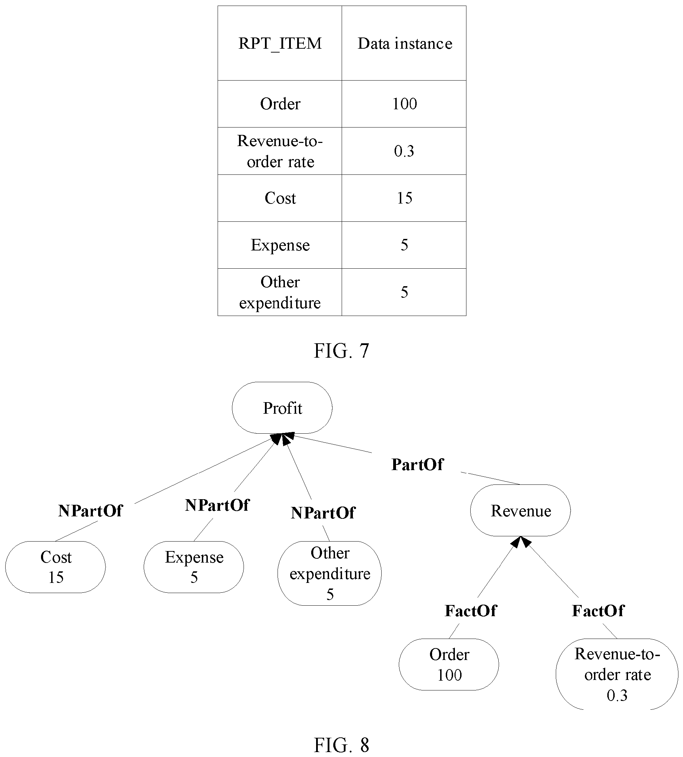

Refer to FIG. 4. FIG. 4 is a semantic graph corresponding to the concept-level service logic (that is, Profit = Revenue - Cost - Expense - Other expenditure, and Revenue = Order × Revenue-to-order rate). Refer to FIG. 6. In FIG. 6, the group profit and loss object is mapped to a physical table GRP_IS, an attribute (Profit and loss indicator) of the group profit and loss object is mapped to a field RPT_ITEM, an attribute (Product) of the group profit and loss object is mapped to a field PROD, and an attribute (Region) of the group profit and loss object is mapped to a field REGION. FIG. 7 shows data instances corresponding to elements Order, Revenue-to-order rate, Cost, Expense, and Other expenditure in the attribute (Profit and loss indicator) of the group profit and loss object. Based on the semantic graph shown in FIG. 4 and the mapped physical table GRP_IS, an instance graph shown in FIG. 8 is generated. Refer to FIG. 8. FIG. 8 shows data instances corresponding to an Order node, a Revenue-to-order rate node, a Cost node, an Expense node, and an Other expenditure node, specifically reaching an executable level at a data layer.

It needs to be noted that, if same service logic needs to correspond to different physical environments, only a physical table to which the service logic is mapped needs to be changed.

S306: Generate executable code based on a service logic relationship between the nodes in the instance graph.

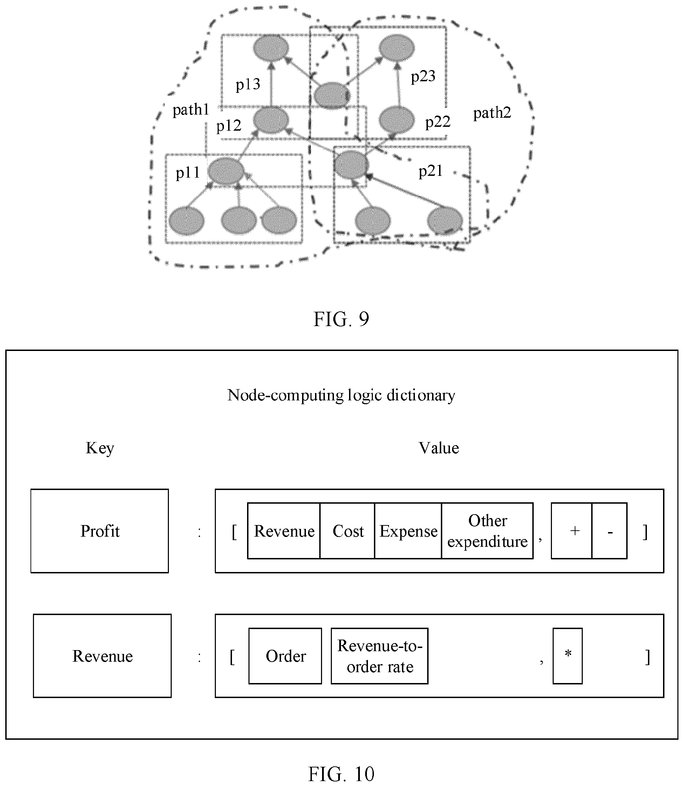

In this embodiment of this application, after the instance graph is generated, local width-first traversal is performed by using a node whose in-degree is 0 in the instance graph as a start node; and a plurality of paths that can run independently and in parallel, for example, path1 and path2 in FIG. 9, are generated based on a dependency relationship between the nodes in the instance graph. Each independent path can be split into a plurality of single steps. For example, path1 may be split into p11, p12, and p13 shown in FIG. 9, and path2 may be split into p21, p22, and p23. Each single step stores a dependency relationship between nodes in a dictionary manner, as shown in FIG. 10. In a path in the overall semantic graph, for a single step including Profit, Revenue, Cost, Expense, and Other expenditure, operation logic of logical relationships between Profit, Revenue, Cost, Expense, and Other expenditure is obtained by parsing based on a meta-path feature in the single step as follows: Profit = Revenue - Cost - Expense - Other expenditure; and then stored in a data structure of the dictionary. In a traversal process, a subpath that matches a predefined meta-path feature is determined, and executable code is generated based on semantic meanings that correspond to types of nodes in the path and semantic meanings that correspond to edges in the path. If a node of a container type is found in the traversal process, lower-layer submap logic encapsulated in the container node is opened; a submap is traversed based on the same logic, to finish generating executable code in the submap; and then an upper-layer instance graph is returned, to continue to perform a subsequent operation. Specifically, analysis by using a predefined meta-path feature is performed between nodes in the semantic graph, to correspond to different service logic semantic representation. For example, if the following meta-path (parent<-child node1, where an edge is part of, and parent<-child node2, where an edge is part of) is encountered (where the parent and the child are of a variable type, indicating service elements), the meta-path is translated into parent = child node1+ child node2, to finishing the translation, based on a meta-path feature of the semantic graph, into executable code.

In this embodiment of this application, S306 supports translation of service logic into executable code. For example, service logic Revenue = Order × Revenue-to-order rate can be translated into SQL "Select order*ord rev R AS rev from GRP_IS" .

In S304 and S306, the service logic is decoupled from implementation logic, and the implementation logic can be obtained through automatic conversion by using the service logic. Service logic configured by service personnel supports visualized representation and is easy to understand, as mentioned previously. In addition, code logic into which the service logic is converted needs to be completely decoupled. In other words, the service logic describes essence of a service and is not bound to physical implementation. When the service logic performs an instantiation action, that is, a physical data object for computing is specified, the service logic can be automatically converted into the implementation logic, which is the executable code.

S308: Determine, based on the executable code and a data instance corresponding to a node whose in-degree is 0 in the instance graph, a data instance corresponding to each node in the instance graph, where the data instance corresponding to the node may be deduced based on a data instance of a previous fork node on which the node depends.

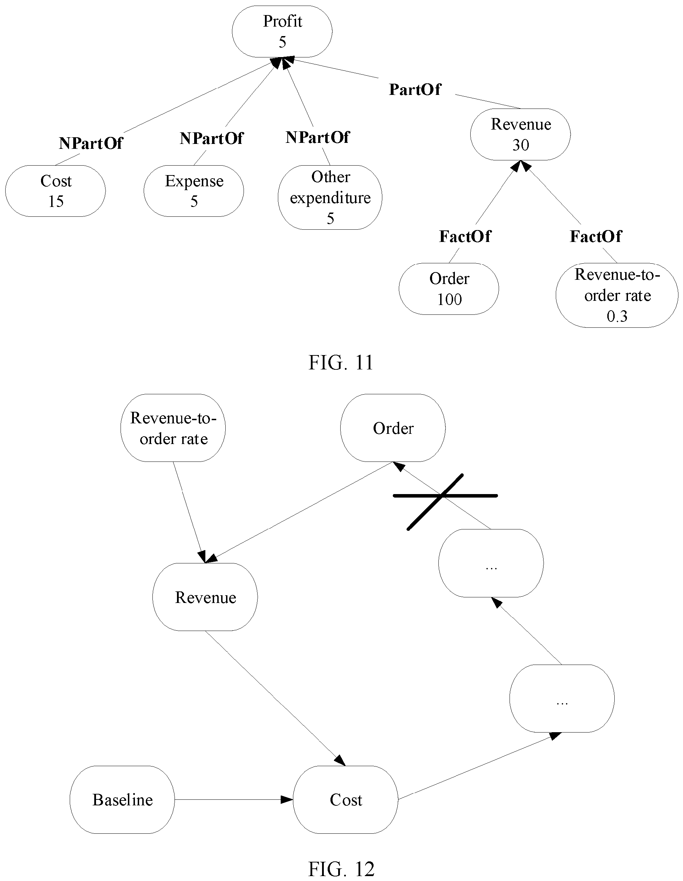

In this embodiment of this application, the service logic can be executed in real time after being instantiated, and feedback is provided to the user in real time. Based on a data instance of 100 corresponding to the Order node and a data instance of 0.3 corresponding to the Revenue-to-order rate node, and the executable code SQL "Select order*ord rev R AS rev from GRP_IS" corresponding to the service logic Revenue = Order × Revenue-to-order rate, a data instance corresponding to the Revenue node of 30 can be obtained. Based on a data instance of 30 corresponding to the Revenue node, a data instance of 15 corresponding to the Cost node, a data instance of 5 corresponding to the Expense node, and a data instance of 5 corresponding to the Other expenditure node, and the executable code corresponding to the service logic Profit = Revenue - Cost - Expense - Other Expenditure, a data instance of 5 corresponding to the Profit node can be obtained. FIG. 11 shows an instance graph after the executable code is executed. The instance graph shows data instances corresponding to all nodes, that is, a Revenue node depends on two previous fork nodes, which are an Order node and a Revenue-to-order rate node. A data instance corresponding to a Revenue node can be deduced based on data instances corresponding to the Order node and the Revenue-to-order rate node. A deduction result can be interpreted.

It needs to be noted that, in this embodiment of this application, a path on which a node that has no data instance in the instance graph is located may be removed based on the predefined meta-path feature.

It needs to be further noted that this application supports automated knowledge management. After the executable code is generated, knowledge computing and management can be further performed, including knowledge computing and execution state management, and knowledge quality management and analysis. The knowledge computing and execution state management completes running of the executable code in a computing environment, and determines a running state and a running progress of the executable code. The knowledge quality management and analysis checks, mainly by using the service logic represented by the semantic graph, whether a service logic conflict or contradiction exists, and supports association analysis, specifically including performing conflict detection and logic representation ambiguity detection on the semantic graph.

The conflict detection on the semantic graph is used mainly to detect existence of loop dependency between service elements. If a loop exists in the semantic graph, this means that circular dependency exists. Circular dependency will fall into an infinite loop during program scheduling, and usually originates from incorrect user input in a service logic configuration process. A system searches for an error through loop detection and reports the error to the user for modification. Steps for conflict detection are as follows:
first, determine that an initially-detected node is not in a node set of a current connection graph, and then perform depth-first traversal starting from the initially-detected node; and
then, each time a node is traversed, if the node does not have an access mark, mark the node with an access mark, add the node to the node set of the current connection graph, and continue with the traversal downward; otherwise, determine that a directed loop is found, as shown in FIG. 12, and output path information formed by all nodes that have an access mark; and if an out-degree of the node is greater than 1 and/or an in-degree of the node is greater than 1, store a previous fork node and/or a next fork node that are/is not traversed by the node into a queue; or
if an out-degree of the node is 0, clear access marks of all nodes in the current connection graph, take a new node out of a queue of a previous fork node and/or a next fork node, and repeat the preceding steps; otherwise, select a node not in the current connection graph, and repeat the preceding steps.

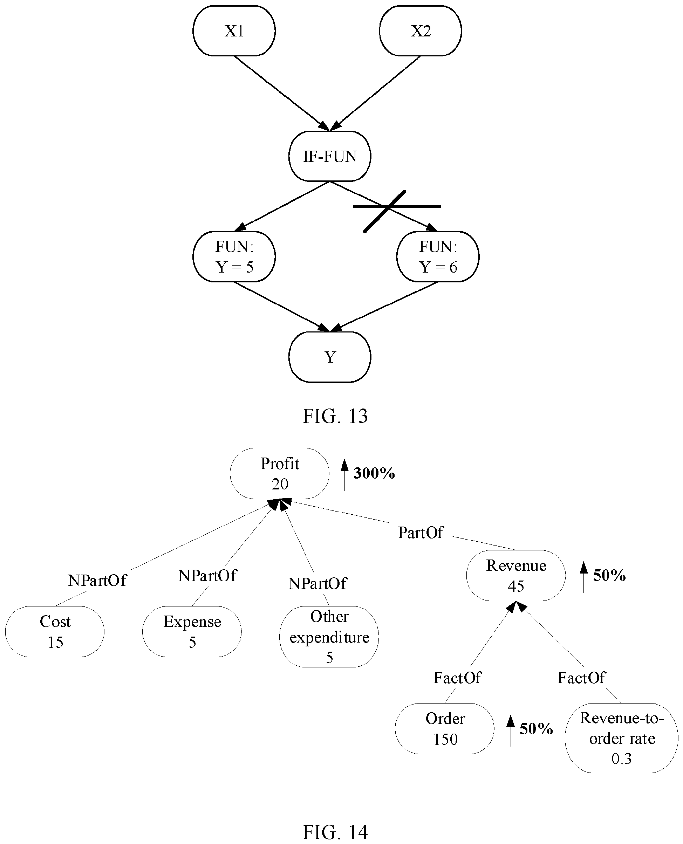

The performing logic representation ambiguity detection on the semantic graph specifically means that, in the semantic graph, when an assumed condition, represented by if-then, of the conceptual-layer service logic is met, if at least two processing manners appear, determining that logic representation ambiguity exists in the semantic graph, specifically, whether logical inconsistency exists when the service logic is represented by if-then. Refer to FIG. 13. IF_FUN determines whether an external scenario meets a condition; and if the condition is met, two processing manners (of an infer relationship) can be deduced and values are assigned to Y, causing a problem of logic representation inconsistency.

Convenient associated-impact analysis and what-if analysis are provided. Associated-impact analysis is performed on the dependency relationship between the nodes in the instance graph, and what-if analysis is performed based on an adjusted data instance, where the what-if analysis is used to represent impact of the adjusted data instance on a subsequent dependent node. For example, as shown in FIG. 14, a data instance corresponding to an Order node is increased by 50% compared with a data instance corresponding to an Order node in FIG. 11, a data instance corresponding to a Revenue node is increased by 50% compared with a data instance corresponding to the Revenue node in FIG. 11, and a data instance corresponding to a Profit node is increased by 300% compared with a data instance corresponding to a Profit node in FIG. 11. It can be learned from the preceding analysis that, the service logic and the implementation logic are extensible and reusable. For a new service requirement, impact of the new service requirement can be traced based on the configured service logic, and the existing implementation logic can be fully utilized.

It needs to be further noted that, this application supports interactive analysis of a service, logic can be dynamically adjusted, a result is generated in near real time, and the result can be interpreted. If a data instance corresponding to a node determined in S208 does not meet service expectation, the user interface shown in FIG. 5 can be returned to modify the service logic or a parameter variable can be adjusted, to re-execute the modified service logic; and a semantic graph corresponding to the modified conceptual-layer service logic is regenerated based on the knowledge representation model. Service knowledge configuration can be divided into two phases. Both phases are visualized, and are oriented to different roles. A first phase is oriented to service logic layer configuration to be performed by service personnel, and a second phase is oriented to IT personnel to specify an actual physical data object to which a service object is mapped.

It needs to be further noted that, the nodes in this embodiment of this application include a node of a constant type, and may further include a node of a function type, and/or a node of a container type; and a type of a node is not specifically limited in this embodiment of this application. Different services have different requirements on a level of details of service logic. On a basis of a heterogeneous graph based on detailed rules, different levels of semantic graphs can be constructed by using container nodes; and multi-level service logic representation is provided, to meet services with different perspectives and different requirements on the level of details.

An embodiment of this application provides an apparatus for knowledge representation and deduction of service logic, including at least one processor. The processor is configured to execute instructions stored in a memory, so that the steps of the method for knowledge representation and deduction of service logic shown in FIG. 3 are performed.

An embodiment of this application provides a computer-readable storage medium. The computer-readable storage medium stores a computer program. When the computer program is performed by a processor, the steps of the method for knowledge representation and deduction of service logic shown in FIG. 3 are performed.

Based on a same concept as the foregoing method embodiment, an embodiment of this application further provides a computer program product including instructions. When the computer program product runs on a computer, the computer is enabled to perform the steps of the method for knowledge representation and deduction of service logic shown in FIG. 3.

Finally, it needs to be noted that, the foregoing embodiments are merely intended for describing technical solutions of this application, but not for limiting this application. Although this application is described in detail with reference to the foregoing embodiments, a person of ordinary skill in the art needs to understand that she or he may still make modifications to technical solutions described in the foregoing embodiments or make equivalent replacements to some technical features thereof, without departing from the spirit and scope of technical solutions in embodiments of this application.

## Claims

1. A method for knowledge representation and deduction of service logic, wherein the method comprises:
generating, based on a knowledge representation model, a semantic graph corresponding to conceptual-layer service logic, wherein the semantic graph comprises one or more types of nodes and edges for connecting the one or more types of nodes, and the nodes comprise at least a node of a variable type;
generating, based on the semantic graph and a physical table to which a service object is mapped, an instance graph, wherein the instance graph comprises the nodes and edges in the semantic graph;
generating executable code based on a service logic relationship between the nodes in the instance graph; and
determining, based on the executable code and a data instance corresponding to a node whose in-degree is 0 in the instance graph, a data instance corresponding to each node in the instance graph, wherein the data instance corresponding to the node may be deduced based on a data instance of a previous fork node on which the node depends.

2. The method according to claim 1, wherein the generating, based on a knowledge representation model, a semantic graph corresponding to conceptual-layer service logic comprises:
obtaining, from the knowledge representation model, nodes and edges corresponding to the conceptual-layer service logic; and
generating, based on the nodes and edges corresponding to the conceptual-layer service logic, the semantic graph.

3. The method according to claim 1, wherein the conceptual-layer service logic comprises: logic of an operation rule type, logic of a condition-based determination type, and/or logic of a complex function/model type.

4. The method according to claim 1, wherein the nodes further comprise a node of a constant type, a node of a function type, and/or a node of a container type; and the node of the container type is encapsulated with a semantic graph that comprises different types of nodes and different types of edges and that is invoked by an upper-layer semantic graph to construct a multi-level semantic graph.

5. The method according to claim 1, wherein the edges comprise: an edge of a process control relationship type, an edge of a computing relationship type, an edge of a logical determination relationship type, and/or an edge of a logical link relationship type.

6. The method according to claim 2, wherein the generating executable code based on a service logic relationship between the nodes in the instance graph comprises:
performing local width-first traversal by using the node whose in-degree is 0 in the instance graph as a start node, and generating, based on a dependency relationship between the nodes in the instance graph, a plurality of paths that can run independently and in parallel;
determining, in a traversal process, a subpath that matches a predefined meta-path feature, and generating, based on semantic meanings that correspond to types of nodes in the path and semantic meanings that correspond to edges in the path, executable code; and
if a node of a container type is found in the traversal process, opening lower-layer submap logic encapsulated in the container node; traversing a submap based on the same logic, to finish generating executable code in the submap; and then returning to an upper-layer instance graph, to continue to perform a subsequent operation.

7. The method according to claim 6, wherein the method further comprises:
removing, based on the predefined meta-path feature, a path on which a node that has no data instance in the instance graph is located.

8. The method according to claim 1, wherein the method further comprises:
determining a running state and a running progress of the executable code in a computing environment.

9. The method according to claim 1, wherein the method further comprises:
performing conflict detection on the semantic graph.

10. The method according to claim 9, wherein the performing conflict detection on the semantic graph comprises:
determining that an initially-detected node is not in a node set of a current connection graph, and then performing depth-first traversal starting from the initially-detected node; and
each time a node is traversed, if the node does not have an access mark, marking the node with an access mark, adding the node to the node set of the current connection graph, and continuing with the traversal downward; otherwise, determining that a directed loop is found, and outputting path information formed by all nodes that have an access mark; and if an out-degree of the node is greater than 1 and/or an in-degree of the node is greater than 1, storing a previous fork node and/or a next fork node that are/is not traversed by the node into a queue; or
if an out-degree of the node is 0, clearing access marks of all nodes in the current connection graph, taking a new node out of a queue of a previous fork node and/or a next fork node, and repeating the preceding steps; otherwise, selecting a node not in the current connection graph, and repeating the preceding steps.

11. The method according to claim 1, wherein the method further comprises:
performing logic representation ambiguity detection on the semantic graph.

12. The method according to claim 11, wherein the performing logic representation ambiguity detection on the semantic graph comprises:
in the semantic graph, when an assumed condition, represented by if-then, of the conceptual-layer service logic is met, if at least two processing manners appear, determining that logic representation ambiguity exists in the semantic graph.

13. The method according to claim 1, wherein the method further comprises:
performing associated-impact analysis on the dependency relationship between the nodes in the instance graph, and performing what-if analysis based on an adjusted data instance, wherein the what-if analysis is used to represent impact of the adjusted data instance on a subsequent dependent node.

14. The method according to claim 1, wherein the method further comprises:
if a data instance corresponding to a node in the instance graph does not meet service expectation, regenerating, based on the knowledge representation model, a semantic graph corresponding to modified conceptual-layer service logic.

15. An apparatus for knowledge representation and deduction of service logic, comprising at least one processor, wherein the processor is configured to execute instructions stored in a memory, so that the method according to any one of claims 1 to 14 is performed.

16. A computer program product comprising instructions, wherein when the computer program product runs on a computer, the method according to any one of claims 1 to 14 is enabled to be performed by the computer.

17. A computer-readable storage medium, wherein the computer-readable storage medium stores a computer program; and when the computer program is performed by a processor, the method according to any one of claims 1 to 14 is performed.
